# EUROPEAN PATENT APPLICATION

(11) **EP 4 478 261 A1**
(43) Date of publication of application: **18.12.2024**
(21) Application number: 23178708.6
(22) Date of filing: 12.06.2023
(51) Int. Cl.: G06N 5/022, G06N 5/04, G06N 5/045, G06F 21/55, H04L 9/40, G06N 3/0464, G06N 3/096

(54) **METHOD AND SYSTEM FOR EXPLAINING CYBERSECURITY ALERTS**

(71) Applicant: Siemens Aktiengesellschaft, 80333 München (DE)
(72) Inventor: Himmelhuber, Anna, 80339 München (DE); Zillner, Sonja, 86911 Diessen am Ammersee (DE)
(74) Representative: Siemens Patent Attorneys

(57) **Abstract**

Observed network communication events are represented as edges in a knowledge graph (G) and processed by an anomaly detection component (AD), generating an alert for the event if its likelihood is below a threshold. An explanation generation component (EG) generates explanations for some of the alerts. A user-profile-specific ontology (UPSP) shapes the explanations into a form and vocabulary that is tailored to the specific user group or a current stage in an AI lifecycle. Preferable embodiments employ a hybrid approach by combining symbolic and sub-symbolic algorithms on knowledge graphs in order to improve the explainability and quality of IDS-generated alerts in modern industrial systems, increasing their usefulness for analysts. Explainable AI (XAI) - i.e., the explainability of AI algorithms - enables analysts to understand how the system is reaching its conclusions and possibly allows them to interact with it in a collaborative manner. The user-profile-specific ontologies facilitate providing knowledge-level explanations for a variety of different user groups, tailored to their background knowledge and expertise, and to a range of tasks along the AI lifecycle, including but not limited to developing the machine learning model of the anomaly detection component, understanding the alerts, and certifying and assessing the AI. In other words, different explanations are provided in the respective user vocabulary based on the desired user group.

## Description

The continuous increase in cyber-attacks has given rise to a growing demand for modern intrusion detection approaches that leverage Machine Learning (ML) to detect both simple security risks as well as sophisticated cyber-attacks. These approaches identify patterns in data and highlight anomalies corresponding to attacks. Such detection tasks are particularly poised to benefit from the ability to automatically analyze and learn from vast quantities of data. There are many relevant examples of the application of deep learning and similar techniques for intrusion detection systems (IDS) based on anomaly detection algorithms able to find deviations from a previously learned baseline.

This is not just relevant for the defense of conventional IT systems, but also in the context of modern operational technology (OT) systems, such as those used in factories and other industrial automation settings. While these industrial control systems used to be exclusively deterministic in their operation, modern Industry 4.0 automation settings are characterized by a convergence of IT and OT infrastructure. This convergence comes with increasingly complex activity patterns and network topologies that make extensive use of autonomous systems and components such as AI-enabled software applications. While this has the potential to substantially improve the flexibility, reliability and efficiency of industrial systems and consumer-oriented manufacturing, it also poses new cybersecurity challenges and demands a high degree of domain-specific knowledge from analysts when assessing potential integrity issues or indications of security compromises.

One of the biggest drivers for successful adoption of ML models is how well human users can understand and trust their functionality. Therefore, Explainable AI (XAI, the explainability of AI algorithms) is needed to enable analysts to understand how the system is reaching its conclusions and possibly allows them to interact with it in a collaborative manner.

It is an object of the present invention to identify a problem in the prior art and to find a technical solution for this.

The objectives of the invention are solved by the independent claims. Further advantageous arrangements and embodiments of the invention are set forth in the respective dependent claims.

According to the method for explaining cybersecurity alerts, the following operations are performed by components, wherein the components are hardware components and/or software components executed by one or more processors:
- storing a knowledge graph in a database, including information about
   - a technical system, in particular an industrial automation system, wherein at least some of the nodes of the knowledge graph represent entities of the technical system and some of the edges of the knowledge graph represent different types of relationships between these entities, according to a first aspect, and
   - observed network communication events between entities of the technical system, represented as edges in the knowledge graph, according to a second aspect,
- selecting a context-specific ontology depending on a role of a user and/or depending on a current stage in an AI lifecycle,
- computing, by an anomaly detection component, a likelihood for each event by performing a link prediction for an edge in the knowledge graph that represents the event, and generating an alert for the event if its likelihood is below a threshold,
- generating, by an explanation generation component processing the context-specific ontology and input and output of the anomaly detection component, explanations for at least some of the alerts, using the context-specific ontology to create explainer classes, wherein each explainer class indicates what input to the anomaly detection component can lead to what output, wherein an explanation is generated for an alert if an OWL reasoner processing the context-specific ontology derives that one of the explainer classes applies for the alert,
- verbalizing, by a verbalizer, the generated explanation for at least one of the alerts, and
- outputting, by a user interface, the verbalized explanation to the user.

The system for explaining cybersecurity alerts comprises the following components:
- a database, storing a knowledge graph, including information about
   - a technical system, in particular an industrial automation system, wherein at least some of the nodes of the knowledge graph represent entities of the technical system and edges of the knowledge graph represent different types of relationships between these entities, according to a first aspect, and
   - observed network communication events between entities of the technical system, represented as edges in the knowledge graph, according to a second aspect,
- a component, configured for selecting a context-specific ontology depending on a role of a user and/or depending on a current stage in an AI lifecycle,
- an anomaly detection component, configured for computing a likelihood for each event by performing a link prediction for an edge in the knowledge graph that represents the event, and generating an alert for the event if its likelihood is below a threshold,
- an explanation generation component, configured for processing the context-specific ontology and input and output of the anomaly detection component, and for generating explanations for at least some of the alerts, using the context-specific ontology to create explainer classes, wherein each explainer class indicates what input to the anomaly detection component can lead to what output, wherein an explanation is generated for an alert if an OWL reasoner processing the context-specific ontology derives that one of the explainer classes applies for the alert,
- a verbalizer, configured for verbalizing the generated explanation for at least one of the alerts, and
- a user interface, configured for outputting the verbalized explanation to the user.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices or any other communication devices that can process data with computer support, processors and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

A possible example of a cyber-attack in an OT system is a security breach. Such a security breach could be a network host that should stay in the local network connecting to the Internet or a developer host directly accessing an edge device. In the latter scenario, with a binary output, a connection of the form "192.168.0.80 to 192.168.0.17" would be flagged as suspicious by a machine learning model. This gives the analyst very little information about what happened and requires further in-depth analysis. The explanation for the anomaly "Security Breach is something whose Connection receives Service via SSH" given by at least some of the embodiments shows that edge devices are usually not the origin or destination of SSH connections and why this connection was flagged as suspicious.

The method and system, or at least some of their embodiments, provide knowledge-level explanations for a variety of different user groups, tailored to their background knowledge and expertise.

Thus, at least some of the embodiments simplify and enable a range of tasks along the AI lifecycle, including but not limited to developing the machine learning model of the anomaly detection component, understanding the alerts, and certifying and assessing the AI.

The method and system, or at least some of their embodiments, allow to target different user groups and to adjust the explanations to the respective user group, using different vocabulary based on the user profile or other parameters.

The method and system, or at least some of their embodiments, can provide different explanations in the respective user vocabulary based on the desired user group.

At least some of the embodiments employ the hybrid approach by combining symbolic and sub-symbolic algorithms on knowledge graphs in order to improve the explainability and quality of IDS-generated alerts in modern industrial systems, increasing their usefulness for analysts. This is achieved by integrating domain-specific data, which enables the system to better contextualize and enrich cybersecurity-relevant observations, while allowing the sub-symbolic machine learning component, for example a GNN, to leverage this additional context, i.e., to learn from these observations in a way that makes use of the rich set of interconnections and relations between different entities in the graph. Similarly to other connectionist models, GNNs lack transparency in their decision-making. Since such sub-symbolic models are built for AI researchers, they are often hard to understand for non-experts. The method and system, or at least some of their embodiments, justify predictions with background knowledge in a human-understandable way by employing the hybrid approach.

The benefits afforded by explanations only fully come to bear when these are human-centered, and the users are able to understand and possibly interact with them. This is especially crucial in the cybersecurity domain, where experts require far more information from the model than a simple binary output for their analysis.

In an embodiment of the method and system, each explanation provides context of a situation in which the respective alert occurred by relating it to other entities in the knowledge graph.

In another embodiment of the method and system, the anomaly detection component is implemented based on a RESCAL algorithm, a TransE algorithm, a DistMult algorithm, or a graph neural network, in particular a graph convolutional neural network.

In an embodiment of the method, the anomaly detection component is a graph neural network. The generating operation includes generating a sub-symbolic explanation, in particular a subgraph of the knowledge graph, for each alert, that is used to calculate a fidelity score with regard to the respective explainer class, by determining an overlap of the sub-symbolic explanation and the explainer class. Alerts are removed if their fidelity score is below a threshold.

In another embodiment of the method and system, the knowledge graph also includes information about observed events at application level, in particular data access events, represented as edges in the knowledge graph, according to a third aspect.

An embodiment of the method comprises the initial operation of creating and/or continuously updating the knowledge graph by ingesting the information about the technical system from engineering tools, in particular in the Automation ML format, the observed network communication from a security monitoring tool, and the observed behavior at application level by processing server logs.

In an embodiment of the method, at least some of the information is ingested into the knowledge graph using an ontology expressed in the W3C OWL 2 standard based on the description logic formalism.

In another embodiment of the method, the selecting operation selects the context-specific ontology from several ontologies stored in an ontology repository. The ontology repository stores in particular a technical ontology, a domain ontology, and an assessment ontology.

In further embodiment of the method, a user profile repository stores different user profiles that are each linked to one of the ontologies stored in the ontology repository, wherein one of the user profiles is selected depending on the role of the user, and wherein the selecting operation selects the ontology that is linked to the selected user profile. In addition, or as an alternative, each stage of the AI lifecycle is linked to one of the ontologies stored in the ontology repository, wherein the selecting operation selects the ontology that is linked to the current stage in the AI lifecycle.

The computer program product comprises instructions which, when the program is executed by a computer, cause the computer to carry out the method.

The provisioning device stores and/or provides the computer program product.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:
- Fig. 1: shows a first embodiment,
- Fig. 2: shows another embodiment,
- Fig. 3: shows an explanation framework for cybersecurity alerts,
- Fig. 4: shows an example of an industrial automation system,
- Fig. 5: shows a knowledge graph G integrating three main sources of knowledge about an automation system,
- Fig. 6: shows an explanation subgraph for flagging a data event as suspicious, and
- Fig. 7: shows an example of stages in an AI lifecycle,
- Fig. 8: shows a generation of explanations EP along an AI lifecycle,
- Fig. 9: shows a flowchart of a possible exemplary embodiment of a method for explaining cybersecurity alerts.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

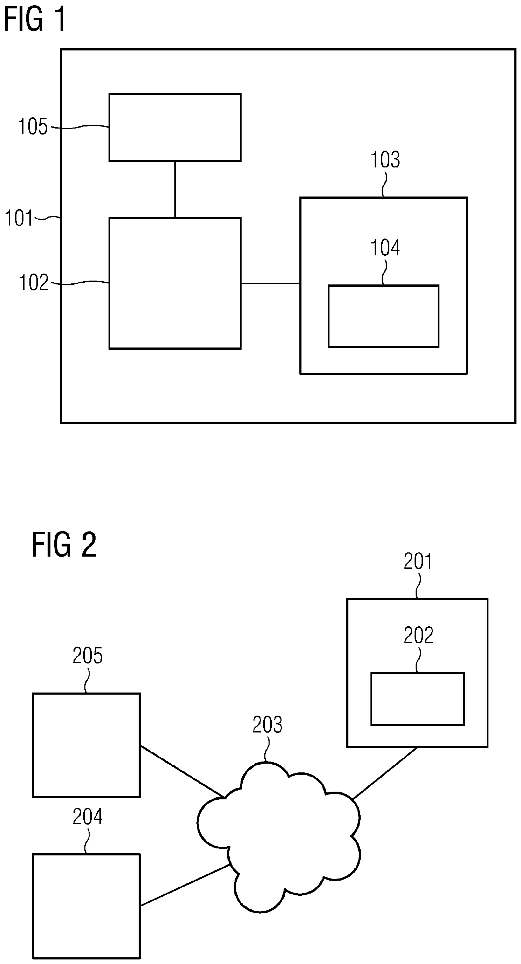

Fig. 1 shows one sample structure for computer-implementation of the invention which comprises:

| | |
|---|---|
| (101) | computer system |
| (102) | processor |
| (103) | memory |
| (104) | computer program (product) |
| (105) | user interface |

In this embodiment of the invention the computer program 104 comprises program instructions for carrying out the invention. The computer program 104 is stored in the memory 103 which renders, among others, the memory and/or its related computer system 101 a provisioning device for the computer program 104. The system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:

| | |
|---|---|
| (201) | provisioning device |
| (202) | computer program (product) |
| (203) | computer network / Internet |
| (204) | computer system |
| (205) | mobile device / smartphone |

In this embodiment the provisioning device 201 stores a computer program 202 which comprises program instructions for carrying out the invention. The provisioning device 201 provides the computer program 202 via a computer network / Internet 203. By way of example, a computer system 204 or a mobile device / smartphone 205 may load the computer program 202 and carry out the invention by executing the program instructions of the computer program 202.

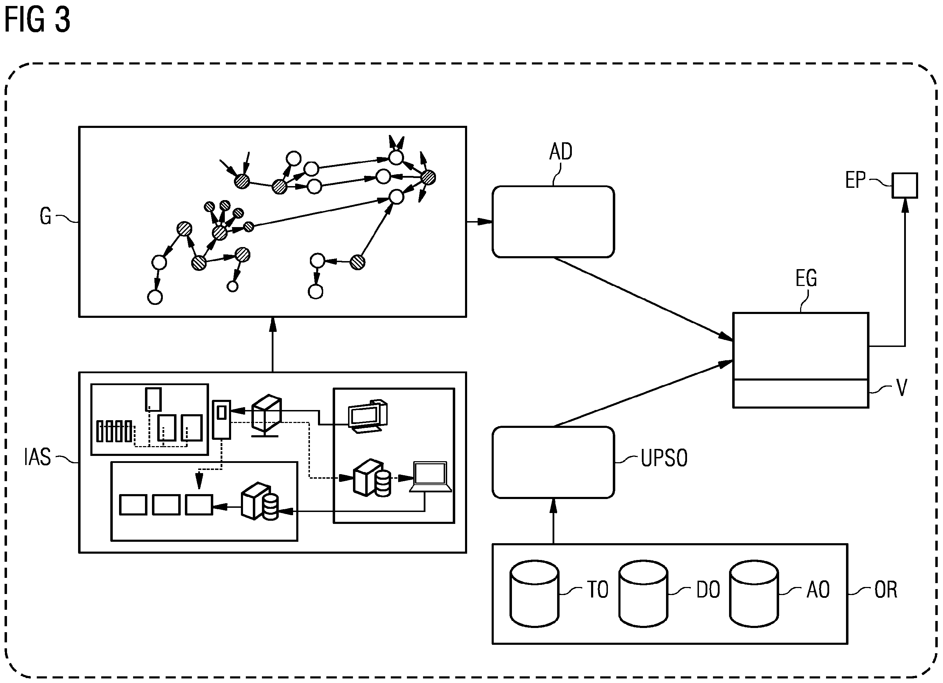

Preferably, the embodiments shown in Figs. 3 to 9 can be implemented with a structure as shown in Fig. 1 or Fig. 2.

At least some of the embodiments described in the following provide user profile based explainability for activities along an AI lifecycle.

Explanations have very different target audiences and target tasks. There is a large variety of different reasons for why XAI is needed, along the AI lifecycle.

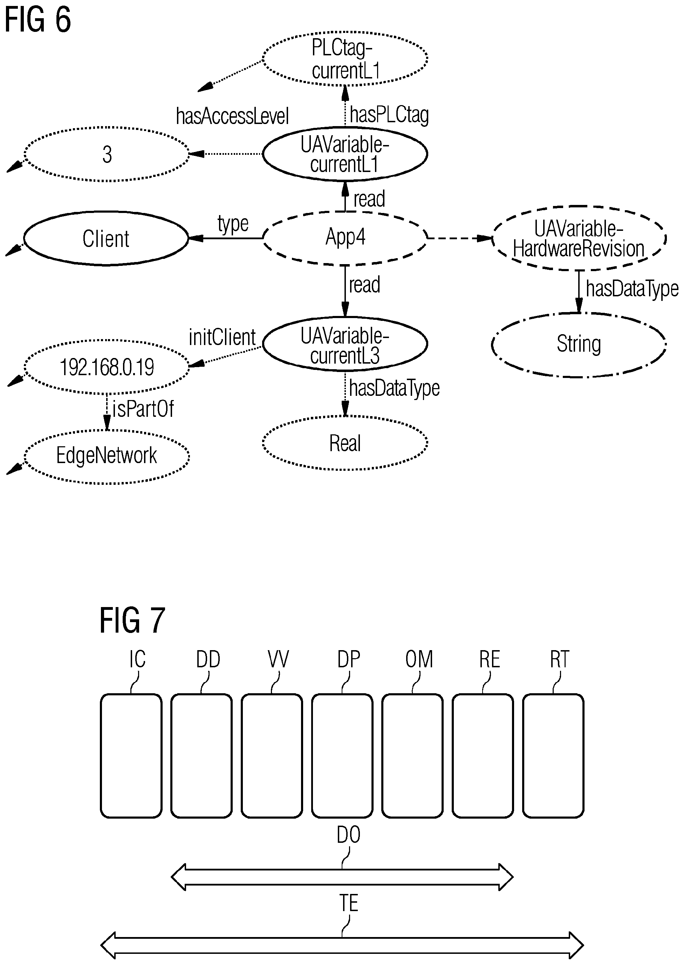

Fig. 7 shows an example of stages in an AI lifecycle, beginning with inception IC, and followed by design and development DD, verification and validation W, deployment DP, operation and monitoring OM, re-evaluation RE, and finally retirement RT. The stages from design and development DD to re-evaluation RE are relevant for DevOps processes DO, while the stages of the entire AI lifecycle benefit from transparency and explainability TE.

The AI lifecycle model describes an iterative process of moving from a business problem to an AI solution by conceptual-izing the different activities as well as involved stakehold-ers while developing and using AI solutions.

Different users are involved in different stages of the AI lifecycle. These users come with differing expertise, technical and domain knowledge and also fulfill different tasks. While an AI expert needs XAI to understand the model itself during development, domain experts want to understand the reasons for predictions during operation and monitoring. Regulatory entities want to certify model compliance with legislations during audits, and managers or product owners want to assess regulatory compliance and understand their corporate AI applications. Since all these different user groups come with different technical knowledge and vocabulary levels, there are no one-size-fits-all explanations. The embodiments described in the following provide XAI approaches that are adapted to the targeted user group in order to ensure their comprehension of the model. By ensuring that the user group can understand the explanations, the XAI solution can fulfil its purpose.

At least some of the embodiments described in the following can provide explainability of AI methods along the AI lifecycle by incorporating background knowledge as well as information needs of the addressed user group:
- For developers of the AI (stages design and development DD, verification and validation W, and re-evaluation RE), the relevant background knowledge is technical/AI knowledge, and the information need is high AI expertise & medium domain expertise.
- For domain experts/security analysts (stages verification and validation W, and operation and monitoring OM), the relevant background knowledge is domain knowledge, and the information need is low AI expertise & high domain expertise.
- For product owners and certification entities (stage re-evaluation RE for certification and continuous assessment), especially for high-risk applications, the relevant background knowledge is assessment knowledge, and the information need is low AI expertise & low domain expertise.

The benefits afforded by explanations only fully come to bear when these are human-centered, and the users are able to understand and interact with them. This is especially crucial in the cybersecurity domain, where domain experts require far more information from the model than a simple binary output for their analysis. While AI experts need to be able to assess the data quality and model parameters to ensure the proper working of the AI, domain experts have a need to understand how the system is reaching its conclusions and allow them to interact with it in a collaborative manner. Especially with high-risk applications, there will be a need to have the AI certified. So, for inner and third-party assessment of the model, the product owners/managers as well as certification entities need to be able to understand the model in order to evaluate and assess it.

The embodiments described in the following address the need for different users to be able to understand the output by adapting explanations to respective user profiles. As a result, at least some of the embodiments make explainability available along the different stages of the AI lifecycle.

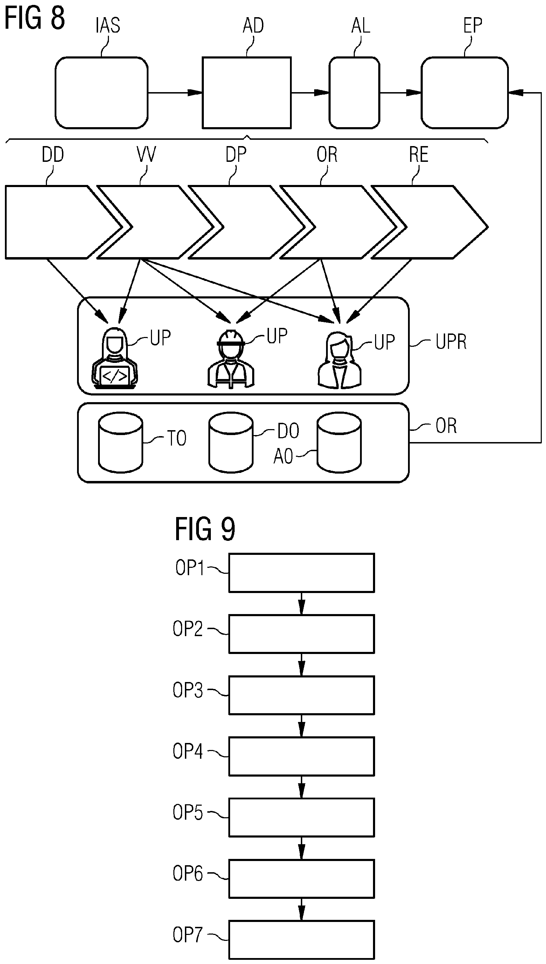

Fig. 8 shows a generation of explanations EP along an AI lifecycle. For the embodiments shown in Figs. 1 to 9, it is assumed that there is a technical system, for example the industrial automation system IAS shown in Figs. 3, 4, and 8, such as a production plant, whose operation makes use of network communication to the outside world (e.g., outside the production plant) and can thus potentially be subject to security attacks. This technical system is accompanied by an anomaly detection component AD (as shown in Figs. 3 and 8, for example a conventional intrusion detection system, IDS) that observes the network communication traffic and detects anomalies, which could in principle be assessed by a system analyst (but which in the following embodiments are further processed and enriched by the explanations EP).

The anomaly detection component AD is a machine learning model that goes through an AI lifecycle as shown in Fig. 8, with the stages of design and development DD, verification and validation W, deployment DP, operation and monitoring OM, and re-evaluation RE.

The anomaly detection component AD is used to detect anomalies in the industrial automation system IAS and therefore generates alerts AL for cybersecurity risks.

Dependent on which part of the AI lifecycle of the anomaly detection component AD (which is a machine learning component undergoing the AI lifecycle) we are in, an explanation EP is triggered for the current user. The explanation EP is dependent on an underlying ontology, which is stored in an ontology repository OR and selected based on a user profile UP that applies to the current user. The user profile UP gives information about the background knowledge that the current user has and which activities in the AI lifecycle are carried out by the current user.

The user profiles UP are stored in a user profile repository UPR. Furthermore, the user profiles UP are mapped to selected stages of the AI lifecycle. Furthermore, each user profile UP is mapped to either a technical ontology TO, a domain ontology DO, or an assessment ontology AO stored in the ontology repository OR. Based on different levels of domain knowledge included, a different depth and domain vocabulary can be used in the explanations EP, by using the respective ontology.

As a result, the current embodiment integrates a repository of different ontologies corresponding with a set of user profiles UP into an explanation approach.

In the following, further embodiments will be described that extend the current embodiment by creating and validating the explanations EP of the alerts AL through using inductive logic learning and verbalization of the explanations EP with a state-of-the-art verbalization framework for increased user-friendliness.

Ying, R., Bourgeois, D., You, J., Zitnik, M. and Leskovec, J., Gnnexplainer: Generating explanations for Graph Neural Networks, Advances in neural information processing systems, 32, p. 9240, 2019, disclose GNNExplainer, a tool for generating explanations for Graph Neural Networks. In order to take node feature information into account, the model-agnostic approach GNNExplainer finds a subgraph of input data which influences the GNN's predictions in the most significant way by maximizing the subgraph's mutual information with the model's prediction. In other words, GNNExplainer is a sub-symbolic explainer that identifies a compact subgraph structure and a small subset of node features that have a crucial role in the GNN's prediction. The entire contents of that document are incorporated herein by reference.

GNNExplainer is a sub-symbolic explainer component in the sense that the discovered subgraph is not a high-level symbolic (human-readable) representation.

Lehmann, J., 2009, DL-Learner: learning concepts in description logics, The Journal of Machine Learning Research, 10, pp. 2639-2642, discloses DL-Learner, a tool for learning concepts in description logics. The entire contents of that document are incorporated herein by reference.

Himmelhuber, A., Grimm, S., Zillner, S., Joblin, M., Ringsquandl, M. and Runkler, T., Combining Sub-symbolic and Symbolic Methods for Explainability, in International Joint Conference on Rules and Reasoning, pp. 172-187, Springer, Cham, 2021, disclose creating and validating explanations of the decision-making of a GNN through using inductive logic learning and calculating fidelity scores by employing a hybrid approach that combines sub-symbolic and symbolic algorithms/AI components for explainability. The entire contents of that document are incorporated herein by reference and are denominated as "the hybrid approach" throughout this specification.

At least some of the following embodiments employ the hybrid approach to create and validate explanations of security alerts through using inductive logic learning.

Fig. 3 shows a high-level workflow of an explanation framework for cybersecurity alerts that is the basis of the embodiments described in the following.

An industrial automation system IAS is reflected in a knowledge graph G, wherein at least some of the nodes of the knowledge graph G represent entities of the industrial automation system IAS and edges of the knowledge graph represent different types of relationships between these entities, and wherein observed network communication events are represented as edges in the knowledge graph G.

Based on the knowledge graph G, an anomaly detection component AD captures security issues and produces corresponding alerts. This is achieved by computing a likelihood for each event by performing a link prediction for an edge in the knowledge graph G that represents the event, and generating an alert for the event if its likelihood is below a threshold. Since an important task of the anomaly detection component AD is the detection of malicious behavior, it focuses on events that are considered to be unexpected or unusual.

Depending on a current user and/or a current stage in the AI lifecycle of the anomaly detection component AD, a user-profile-specific ontology UPSO is selected from an ontology repository OR that contains a technical ontology TO, a domain ontology DO, and an assessment ontology AO.

An explanation generation component EG processes the user-profile-specific ontology UPSO and input and output of the anomaly detection component AD and generates explanations for the alerts, using the user-profile-specific ontology UPSO to create explainer classes. Each explainer class is a description that represents a set of individuals by formally specifying conditions on the individuals' properties. It captures the global behavior of the anomaly detection component AD through investigating what input patterns can lead to a specific prediction, wherein an explanation EP is generated for an alert if an OWL reasoner processing the user-profile-specific ontology UPSO derives that one of the explainer classes applies for the alert.

A filter component can remove at least some false positives among the generated alerts, using the generated explanations as a filter criterion, by discarding alerts that have no explanation.

A verbalizer V verbalizes at least one explanation EP. The verbalized explanation can be output as text or speech by the user interface shown in Fig. 1.

At least some of the embodiments of the method and system draw from the hybrid approach, wherein the anomaly detection component AD is a graph neural network (GNN). The explanation generation component EG uses GNNExplainer to process the results of the anomaly detection component AD. At the symbolic level, the user-profile-specific ontology UPSO contributes to the explanation generation component EG with the help of DL-Learner, as will be described in more detail below.

However, other embodiments of the method and system operate without the hybrid approach and/or without a graph neural network. In particular, the anomaly detection component AD can be implemented as any kind of learning component that is apt for link prediction in knowledge graphs. EP 4030351 A1 describes the implementation of such learning components in detail, and mentions in this regard transductive algorithms, for example RESCAL, TransE, or DistMult, and inductive algorithms. The entire contents of that document are incorporated herein by reference.

Those embodiments of the method and system that draw from the hybrid approach couple the sub-symbolic explainer component GNNExplainer with the symbolic DL-Learner component to explain GNN instance-level link predictions. Firstly, a GNN acting as the anomaly detection component AD is trained on and applied to training and testing data and subsequently the sub-symbolic explainer component GNNExplainer is applied, which outputs explainer subgraphs.

Secondly, to create explainer classes for the GNN decision making process, DL-Learner is applied for a specific predicted category, with positive and negative examples labelled accordingly. An explainer class is a description that represents a set of individuals by formally specifying conditions on the individuals' properties. It captures the global behavior of a GNN through investigating what input patterns can lead to a specific prediction.

To this end, DL-Learner processes the user-profile-specific ontology UPSO. This is an important step in the current embodiment, as it provides different users with custom explanations that are suitable to their specific domain/background knowledge.

Those embodiments of the method and system that draw from the hybrid approach use the pool of possible explainer classes created by the DL-Learner to generate instance-level explanations through explainer class entailment. Explainer class entailment is given when an explainer class applies for a certain alert, given the user-profile-specific ontology UPSO and as can be derived by a standard OWL reasoner. Or in other words, the explainer class is entailed if the learned overall decision-making pattern of the GNN applies to a specific alert.

For increased trustworthiness, the fidelity for each explanation can be given. Fidelity is defined as the measure of the accuracy of the student model (DL-Learner) with respect to the teacher model (GNN). High fidelity is therefore fundamental whenever a student model is to be claimed to offer a good explanation for a teacher model. Without high fidelity, an apparently perfectly good explanation produced by an explainable system is likely not to be an explanation of the underlying sub-symbolic system which it is expected to explain.

In the current embodiment, the fidelity metric used to calculate fidelity is defined as the overlap of the output of the sub-symbolic explainer component GNNExplainer with the entailed explainer classes. The explainer classes are represented through axioms, e.g., "Sniffing is something whose data event client is App4 and whose data event variable is something that has data type something that is not data type real".

The denominator equals the count of the set of edges or node features that have to be part of the subgraph for the entailment of explainer class to hold. For the numerator, the current embodiment counts the overlap of the identified set of individuals with the individuals in the subgraph identified by the sub-symbolic explainer component GNNExplainer.

In the current embodiment, the hybrid approach ensures the trustworthiness of the explanation through including a sub-symbolic explanation element. Therefore, a fidelity metric can be given that shows how close the explanation is to the actual decision-making process of the machine learning algorithm (GNN).

Various embodiments for implementing the individual parts of the embodiments shown in Figs. 3 and/or 8 are explained in more detail below.

### Industrial Automation System

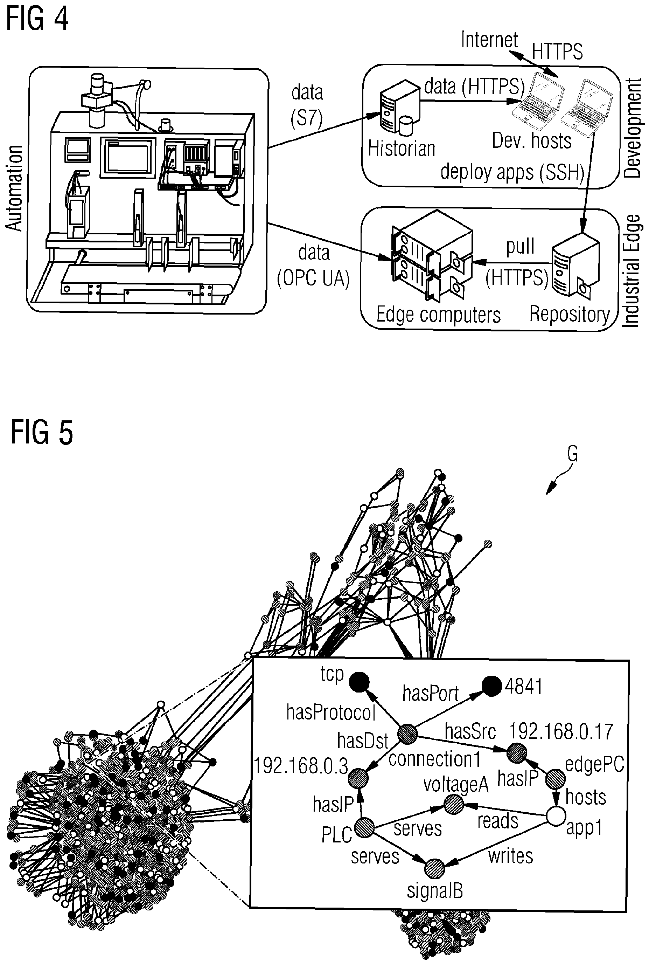

Fig. 4 shows an industrial automation system (more specifically, a demonstrator used for testing) consisting of an automation part, a development environment, and an industrial edge. The industrial automation system can be used for measuring the height of objects for quality control amongst other capabilities, following the design of modern industrial systems integrating IT and OT elements. The automation side is equipped with a programmable logic controller (PLC) connected to peripherals via an industrial network. These include a drive subsystem controlling the motion of a conveyor belt, an industrial camera, a human-machine interface, and a distributed I/O subsystem with modules interfacing with various sensors for object positioning and other measurements (Fig. 4, left). The PLC exposes values reported by these sensors as well as information about the state of the system by means of an OPC-UA server. The variables exposed by the server are consumed on the IT part of the industrial automation system by applications hosted on edge computing servers (Fig. 4, bottom right), i.e., computing infrastructure directly located at the factory floor which is typically devoted to data driven tasks that require close integration with the automation system and short response times, such as real-time system monitoring, fault prediction or production optimization. Industrial edge applications have dynamic life cycles, and this is captured in the prototype by recreating a development environment (Fig. 4, top right). This cycle starts with development hosts consuming potentially high volumes of data from a historian, a database that constantly stores process data from the automation system. Finally, edge computing hosts fetch application updates periodically. To make the behavior more realistic, development hosts occasionally access the internet with low traffic volumes.

The environment of the industrial automation system is fully virtualized and performs these activities in an autonomous manner, with an option to manually induce different types of anomalous behaviors in order to test the response of the IDS system according to the current embodiment.

### Knowledge Graph

Fig. 5 shows a multi-relational graph, which is a knowledge graph G. The knowledge graph G is built out by integrating three main sources of knowledge: information about the industrial automation system shown in Fig. 4, observations at the network level (e.g., connections between hosts), and observations at the application level (e.g., data access events). A sizeable portion of the information is related to the industrial automation system, which is extracted from engineering tools in the Automation ML format and ingested into the knowledge graph G using an ontology. Information about application activity is obtained from server logs, including session information, i.e., which variables are accessed and in which way. Finally, all network traffic is passed through a security monitoring tool which produces a stream of observed connections that are ingested into the knowledge graph G using a simple custom data model.

The knowledge graph G is a specific type of knowledge base where information is encoded in the form of a directed labeled graph, with nodes representing entities and edges representing different types of possible relationships between entities. Knowledge graphs are particularly useful structures to integrate data from multiple areas of knowledge, typically making use of domain-specific vocabularies and ontologies that model the different categories, relationships, rules, and constraints in a specific area of knowledge. For incorporating explicit domain knowledge into the knowledge graph G on the side of symbolic representation, ontologies expressed in the W3C OWL 2 standard based on the description logic formalism can be used. The basic constituents for representing knowledge in OWL are individuals, classes, and properties. They are used to form axioms, i.e., statements within the target domain, and an ontology is a set of axioms to describe what holds true in this domain. The most relevant axioms for the current embodiment are class assertions c(a) assigning an individual a to a class c, property assertions r(a1, a2) connecting two individuals a1, a2 by property r, and subclass axioms c1 ⊆ c2 expressing that class c1 is a subclass of class c2. Classes can be either atomic class names, such as "App1", or they can be composed by means of complex class expressions. An example for a complex class expression noted in Manchester syntax is "UAVariable and hasDataType byte", which refers to all UAVariables which have the data type byte.

### Anomaly Detection Component

As mentioned above, there are various alternatives and embodiments for implementing the anomaly detection component, for example, the ones described in EP 4030351 A1.

Such use of machine learning methods is possible on knowledge graphs, typically by means of so-called graph embeddings: vector representations of graph entities which are more suitable for processing via neural networks and similar algorithms than their original symbolic representations. This kind of relational learning on knowledge graphs is applied to security monitoring and intrusion detection by mapping events in the industrial automation system to links in the knowledge graph. This way, the anomaly detection task can be rephrased as a link prediction task in the knowledge graph representation of the modeled industrial automation system. The collective learning properties of graph embedding algorithms allow the resulting models to generalize beyond individual observations, benefiting from the context provided by a rich set of entity and relationship types.

In those embodiments of the method and system that draw from the hybrid approach, anomaly detection is performed by a graph neural network (GNN), in other words, a GNN is used to detect unexpected activity in the industrial automation system. Those embodiments employ a 2-step process: (1) Learning a baseline of normal behavior by training the GNN on a knowledge graph built from a training dataset, and (2) Applying the GNN in a link prediction setting to rank the likelihood of triple statements resulting from events observed at test time and determine whether they represent an anomaly. Triple statements are also discussed in detail in EP 4030351 A1.

A GNN usually consists of graph convolution layers which extract local substructure features for individual nodes and a graph aggregation layer which aggregates node-level features into a graph-level feature vector.

Initially, a baseline is captured with the industrial automation system under normal operating conditions, and the collected data is used to train the link prediction algorithm (a GNN or any other apt learning component, see EP 4030351 A1, performing as the anomaly detection component) in an un-supervised manner. Thereafter, in order to qualitatively evaluate the predictions, a set of actions can be triggered which result in events not observed during normal operation, but which would be assigned a wide range of severity levels by a human expert upon detailed analysis of the available contextual information. Suspicious behavior is novel behavior given the baseline definition.

These scenarios can be defined following the ATT&CK framework for Industrial Control Systems, i.e., a standardized collection of cyber-attack patterns, to guarantee a high degree of realism. The employed scenarios are as listed:

### Scenario description

### Application activity

1.1 App changes the way it accesses some variables (e.g., writes instead of reads).
1.2 App accesses variables completely unrelated to those accessed usually.

### Network activity (HTTPS)

2.1 A local address not corresponding to a dev. host (e.g., an edge server) accesses the historian.
2.2 A local address not corresponding to a dev. host (e.g., an edge server) accesses a public IP address.
2.3 A high-volume HTTP access is made to a public IP address (high volumes only from historian in baseline).

### Network activity (SSH)

3.1 The historian host (not a dev. host but on the same network) accesses the app repository via SSH.
3.2 A dev. host accesses an edge server via SSH, but during training no edge servers received SSH connections.
3.3 SSH connection between two edge servers. Usually no edge servers started or received SSH connections.

### Credential use

4.1 Access to OPC-UA server from an IP address that corresponds to a development host.

### Network Scan

5.1 Connection which does not match any source-destination pair usually observed.
5.2 Attempt to connect to an IP which is not assigned to any host.

One example is sniffing, where an app accesses data variables completely unrelated to those accessed usually (Scenario 1.2), e.g., not served by the PLC, or with a different data type, such as strings instead of numeric data types like int, real, etc. This could be an event where system information is extracted, like serial numbers of devices or firmware versions, which is useful information for discovering back doors and vulnerabilities of the system.

### Explanation Generation

Tools specially designed to address tasks related to the detection of malicious behavior typically tend to focus more on events or observations that are considered to be unexpected or unusual. Similarly, detected unexpected events serve as the trigger for explanations in the current embodiment, where the type of abnormality is identified. For testing events of a certain device (e.g., activity of a certain app, or network connections between two certain IPs), the events are compared against each other based on class category. For example, the suspicious class against the baseline. The current embodiment implements this by using model predictions, based on a ranked list with suspiciousness scores. Thus, one can compare, e.g., the top entry with compatible baseline events. This is how positive and negative examples for the DL-Learner are generated, which generates class expressions, such as
(*dataevent_client* **some** *App*4) **and** (*dataevent_variable* **some** (*hasDataType* **some** (not (*hasDataType_REAL*)))).

For increased user-friendliness, the class expressions are verbalized further, for example with the state-of-the-art *LD2NL* framework. Through this verbalization step, the above example of a class expression of the class Sniffing is translated to "Sniffing is something whose data event client is App4 and whose data event variable is something that has data type something that is not data type real."

The following list shows a selection of explanations, along with their verbalization and correspondence with a sub- scenario :

### Explainer Class

(*dataevent_client* **some** *App*5) **and** (*dataevent_operation* **some** WriteOp)
→ Attack Scenario 1.1

### Verbalization

Sniffing is something whose data event client is an App5 and whose data event operation is a Write Operation

### Explainer Class

(*dataevent_client* **some** *App*4) **and** (*dataevent_variable* **some** (*hasDataType* **some** (not (*DataType_REAL*))))
→ Attack Scenario 1.2

### Verbalization

Sniffing is something whose data event client is App4 and whose data event variable is something that has data type something that is not data type real

### Explainer Class

*Network_CL* **and** (*service* **some** *service_ssh*)
→ Attack Scenario 3.2

### Verbalization

Security Breach is something whose service is SSH

### Explainer Class

(*id.resp_p* **some** *id.resp_p_*22.0) **and** (*orig_bytes* **some** *orig_bytes_log_10to2)*
→ Attack Scenario 3.3

### Verbalization

Security Breach is something whose port is an 22 and whose origin volume is 10 to 2

### Explainer Class

(*init_client* **some** *App*3) **and** (*init_server* **some** (*isPartOf* **some** *DevNetwork*))
→ Attack Scenario 4.1

### Verbalization

Credential Use is something whose initial client is an App3 and whose initial server is something that is part of a development network

### Explainer Class

*id.resp_p* **some** *id.resp_p_22.0*
→ Attack Scenario 5.1

### Verbalization

Network Scan is something whose port is 22

In the above example, the verbalized explanation "Credential Use is something whose initial client is an App3 and whose initial server is something that is part of a development network" corresponds to Scenario 4.1. "Access to OPC-UA server from an IP address that corresponds to a development host." The explanation captures the anomaly and is even more specific to the concrete data example, as it also gives information about the initial client. This explanation of a Credential Use anomaly is, for example, entailed for the triple "App3 initiatedFrom 192.168.0.80".

The explanation "Network Scan is something whose port is 22", which is, amongst others, entailed for connection "192.168.0.18 to 192.168.0.60", may need some additional information for a layman, but should give ample information for a domain expert. Here, the IP Address does a network scan and, of course, also scans IPs it normally connects to, but with the wrong port - SSH (22) instead of HTTPS (443). Overall, one can see that the explanations capture the general scenarios, while often being more specific in describing the concrete anomaly in the data.

Fig. 6 shows an explanation subgraph for flagging a data event "App4 Read UAVariable-HardwareRevision" as suspicious generated by GNNExplainer.

In those embodiments of the method and system that draw from the hybrid approach, sub-symbolic explanations in the shape of subgraphs are generated by GNNExplainer, as can be seen in Fig. 6, showing the as suspicious flagged data event "App4 read UAVariableHardwareRevision". The nodes and edges drawn with dotted lines are considered not influential in the flagging by the GNN, as opposed to the remaining subgraph. This information is then used to calculate the fidelity score of the entailed explainer class for each flagged event. As can be seen in Fig. 6, the entailed explanation is part of the identified subgraph, with the data event client being "App4" and the "UAVariable-HardwareRevision" having datatype string. Therefore, the explanation generated by the DL-Learner shows fidelity with respect to the GNN.

### User-Profile-Specific (i.e., context-specific) Explanations

In all of the embodiments shown in Figs. 1-9, different user profiles can be used to create explanations that are tailored to the role of the user and/or the current stage in the AI lifecycle. For example, user profiles can be stored for an AI developer, a domain expert, and a product owner/TUEV, but different user profiles are also possible. Inductive logic learning is used to generate explanations for an alert, as was described above. The knowledge base used to create explanations depends on which part of the AI lifecycle we are in and based on that which user profile is responsible for handling this part of the AI lifecycle. Each user profile then comes with a specific ontology which is found in the ontology repository.

For example, an explanation for a user with user profile AI developer, who wants to understand the data quality and model parameters, might be of the form
*node feature app and graph motif triad.*

As a further example, an explanation for a user with user profile domain expert, who wants to evaluate if the alerts pose a cybersecurity risk, might be of the form
*(dataevent client some App4) and (dataevent variable some (hasDataType some (not (hasDataType REAL)))).*

Finally, an explanation for a user with user profile product owner, who wants to understand if the model can be trusted for assessment, might be of the form

### Parameters application activity and datatype.

### Filter False Positives

The explanations are covering 100% of all true positive alerts. This gives the domain expert the advantage to focus on triggered alerts that have been created based on the availability of an explanation, reducing the need to investigate false positives by a large percentage. According to the embodiment, all alerts that the framework does not provide explanations for are filtered out as they are false positives. The use of these filter techniques significantly reduces the time and resources required by the domain expert.

Additionally, more time will be saved in the analysis of the remaining alerts, as explanations for these are provided as described above.

In a further step, the fidelity of the explanation per alert can be taken into account. Such an additional filtering step would lead to a further reduction of the false positives. However, some true positives could also be missed. Therefore, depending on the preferences of the domain expert, it might be preferable to use the fidelity score as a means to prioritize the alerts. The use of these filter and prioritization techniques significantly reduces the time and resources needed by the domain expert. Additionally, more time will be saved in the analysis of the remaining alerts, as explanations for these are available.

Fig. 7 shows a flowchart of a possible exemplary embodiment of a method for explaining cybersecurity alerts.

In a first operation OP1, a knowledge graph is created and/or continuously updated by ingesting information about a technical system from engineering tools, in particular in the Automation ML format, observed network communication from a security monitoring tool, and observed behavior at application level by processing server logs.

In a second operation OP2, a database stores the knowledge graph, including information about the technical system, in particular an industrial automation system, wherein at least some of the nodes of the knowledge graph represent entities of the technical system and edges of the knowledge graph represent different types of relationships between these entities, and observed network communication events between entities of the technical system, represented as edges in the knowledge graph.

In a third operation OP3, a context-specific ontology UPSO is selected depending on a role of a user and/or depending on a current stage in an AI lifecycle.

In a fourth operation OP4, an anomaly detection component, in particular a graph neural network, computes a likelihood for each event by performing a link prediction for an edge in the knowledge graph that represents the event, and generating an alert for the event if its likelihood is below a threshold.

In a fifth operation OP5, an explanation generation component processes the context-specific ontology and input and output of the anomaly detection component, and generates explanations for at least some of the alerts, using the context-specific ontology to create explainer classes, wherein each explainer class indicates what input to the anomaly detection component can lead to what output, wherein an explanation is generated for an alert if an OWL reasoner processing the context-specific ontology derives that one of the explainer classes applies for the alert.

In a sixth operation OP6, a verbalizer verbalizes the generated explanation for at least one of the alerts.

In a seventh operation OP7, a user interface as shown in Fig. 1 outputs the verbalized explanation as text or speech to the user.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code, and the like, operating alone or in combination. Likewise, processing strategies may include multiprocessing, multitasking, parallel processing, and the like.

The invention has been described in detail with reference to embodiments thereof and examples. Variations and modifications may, however, be effected within the scope of the invention covered by the claims. The phrase "at least one of A, B and C" as an alternative expression may provide that one or more of A, B and C may be used.

## Claims

1. A computer implemented method for explaining cybersecurity alerts, wherein the following operations are performed by components, and wherein the components are hardware components and/or software components executed by one or more processors:
- storing (OP2) a knowledge graph (G) in a database, including information about
- a technical system, in particular an industrial automation system (IAS), wherein at least some of the nodes of the knowledge graph (G) represent entities of the technical system and some of the edges of the knowledge graph (G) represent different types of relationships between these entities, according to a first aspect, and
- observed network communication events between entities of the technical system, represented as edges in the knowledge graph (G), according to a second aspect,
- selecting (OP3) a context-specific ontology (UPSO) depending on a role of a user and/or depending on a current stage in an AI lifecycle,
- computing (OP4), by an anomaly detection component (AD), a likelihood for each event by performing a link prediction for an edge in the knowledge graph (G) that represents the event, and generating an alert for the event if its likelihood is below a threshold,
- generating (OP5), by an explanation generation component (EG) processing the context-specific ontology (UPSO) and input and output of the anomaly detection component (AD), explanations for at least some of the alerts, using the context-specific ontology (UPSO) to create explainer classes, wherein each explainer class indicates what input to the anomaly detection component (AD) can lead to what output, wherein an explanation is generated for an alert if an OWL reasoner processing the context-specific ontology (UPSO) derives that one of the explainer classes applies for the alert,
- verbalizing (OP6), by a verbalizer (V), the generated explanation for at least one of the alerts, and
- outputting (OP7), by a user interface (105), the verbalized explanation (EP) to the user.

2. The method of claim 1,
- wherein each explanation provides context of a situation in which the respective alert occurred by relating it to other entities in the knowledge graph (G).

3. The method according to any of the preceding claims,
- wherein the anomaly detection component (AD) is implemented based on a RESCAL algorithm, a TransE algorithm, a DistMult algorithm, or a graph neural network, in particular a graph convolutional neural network.

4. The method according to any of the preceding claims,
- wherein the anomaly detection component (AD) is a graph neural network,
- wherein the generating operation (OP5) includes generating a sub-symbolic explanation, in particular a subgraph of the knowledge graph (G), for each alert, that is used to calculate a fidelity score with regard to the respective explainer class, by determining an overlap of the sub-symbolic explanation and the explainer class, and
- wherein alerts are removed if their fidelity score is below a threshold.

5. The method according to any of the preceding claims,
- wherein the knowledge graph (G) also includes information about observed events at application level, in particular data access events, represented as edges in the knowledge graph (G), according to a third aspect.

6. The method according to claim 5,
with the initial operation of
- creating (OP1) and/or continuously updating the knowledge graph (G) by ingesting the information about
- the technical system from engineering tools, in particular in the Automation ML format,
- the observed network communication from a security monitoring tool, and
- the observed behavior at application level by processing server logs.

7. The method according to claim 6,
- wherein at least some of the information is ingested into the knowledge graph (G) using an ontology expressed in the W3C OWL 2 standard based on the description logic formalism.

8. The method according to any of the preceding claims,
- wherein the selecting operation (OP3) selects the context-specific ontology (UPSO) from several ontologies stored in an ontology repository (OR), and
- wherein the ontology repository (OR) stores in particular a technical ontology (TO), a domain ontology (DO), and an assessment ontology (AO).

9. The method according to claim 8,
- wherein a user profile repository (UPR) stores different user profiles (UP) that are each linked to one of the ontologies stored in the ontology repository (OR), wherein one of the user profiles (UP) is selected depending on the role of the user, and wherein the selecting operation (OP3) selects the ontology that is linked to the selected user profile (UP), and/or
- wherein each stage of the AI lifecycle is linked to one of the ontologies stored in the ontology repository (OR), and wherein the selecting operation (OP3) selects the ontology that is linked to the current stage in the AI lifecycle.

10. A system for explaining cybersecurity alerts, comprising the following components:
- a database, storing a knowledge graph (G), including information about
- a technical system, in particular an industrial automation system (IAS), wherein at least some of the nodes of the knowledge graph (G) represent entities of the technical system and edges of the knowledge graph (G) represent different types of relationships between these entities, according to a first aspect, and
- observed network communication events between entities of the technical system, represented as edges in the knowledge graph (G), according to a second aspect,
- a component, configured for selecting a context-specific ontology (UPSO) depending on a role of a user and/or depending on a current stage in an AI lifecycle,
- an anomaly detection component (AD), configured for computing a likelihood for each event by performing a link prediction for an edge in the knowledge graph (G) that represents the event, and generating an alert for the event if its likelihood is below a threshold,
- an explanation generation component (EG), configured for processing the context-specific ontology (UPSO) and input and output of the anomaly detection component (AD), and for generating explanations for at least some of the alerts, using the context-specific ontology (UPSO) to create explainer classes, wherein each explainer class indicates what input to the anomaly detection component (AD) can lead to what output, wherein an explanation is generated for an alert if an OWL reasoner processing the context-specific ontology (UPSO) derives that one of the explainer classes applies for the alert,
- a verbalizer (V), configured for verbalizing the generated explanation for at least one of the alerts, and
- a user interface (105), configured for outputting the verbalized explanation (EP) to the user.

11. Computer program product comprising instructions which, when the program is executed by a computer, cause the computer to carry out a method according to one of the method claims.

12. Provisioning device for the computer program product according to the preceding claim, wherein the provision device stores and/or provides the computer program product.
